# EUROPEAN PATENT SPECIFICATION

(11) **EP 1 329 610 B1**
(45) Date of publication and mention of the grant of the patent: **29.03.2006**
(21) Application number: 03250208.0
(22) Date of filing: 14.01.2003
(51) Int. Cl.: F02B 29/04

(54) **Inlet air arrangement for piston engine**
Lufteinlassvorrichtung für Kolbenmotor
Dispositif d'admission d'air pour moteur à pistons

(30) Priority: 17.01.2002 FI 20020087
(43) Date of publication of application: 23.07.2003
(73) Proprietor: Wärtsilä Finland Oy, 65380 Vaasa (FI)
(72) Inventor: RENKONEN, Jari, 21620 Kuusisto (FI)
(74) Representative: Hanson, William Bennett

(56) References cited:
- WO-A-00/40844
- DE-A- 2 059 220
- DE-A- 2 105 657
- DE-A- 19 639 422
- US-A- 4 562 697

## Description

The invention relates to a piston engine suction air arrangement, which comprises a supercharger apparatus, a suction air collector chamber, a feeding channel, which is in connection with the supercharger apparatus and with an inlet part of the collector chamber, for each engine cylinder a connecting channel, which connects the cylinder and the collector chamber, as well as a heat transfer apparatus for suction air positioned in connection with the suction air collector chamber.

It has been proposed to use a suction air intercooler after a supercharger apparatus, especially in supercharged engines, for intensifying their operation. By cooling the air, its mass flow rate increases and thus a greater amount of oxygen is available in the combustion process with the same volume flow rate. Typically this has been implemented in such a way that suction air is led from the supercharger apparatus to a separate intercooler, in which the temperature of the air decreases. From the intercooler, air is led further along the suction air channel to the suction air chamber, fitted with the engine, which extends throughout essentially the entire length of the engine. Air is led from the suction air chamber to each of the cylinders through separate channels.

Documents US 3881455 and US 3091228 have proposed solutions, by which the space required by the engine can be reduced by integrating the intercooler with the suction air chamber. However, these solutions are defective in so far as neither the suction air flow nor its cooling is uniform. DE-A-2.059.220 describes a piston engine suction air arrangement according to the preamble of Claim 1.

One aim of the invention is to provide a piston engine suction air arrangement, which minimizes the problems of the prior art. A more specific aim of the invention is to provide a piston engine suction air arrangement, by which the cooling and feeding of the suction air is controlled and adequate especially in large engines.

The present invention provides a piston engine suction air arrangement according to claim 1. Preferred or optional features of the invention are defined in the other claims.

The piston engine suction air arrangement according to the invention comprises a supercharger apparatus, a suction air collector chamber and a feeding channel, which is in connection with the supercharger apparatus and with an inlet part of the collector chamber. Further, the arrangement comprises for each engine cylinder a connecting channel, which connects the cylinder and the collector chamber, as well as a suction air heat transfer apparatus positioned in connection with the suction air collector chamber. The heat transfer apparatus comprises several heat transfer elements in the collector chamber located throughout substantially the entire inside length thereof. Preferably, the functioning of each element is separately adjustable and controllable.

In an embodiment of the invention, the piston engine comprises several cylinders arranged inline, the suction air collector chamber extending essentially throughout the entire length of the cylinder line, and the heat transfer apparatus divides the suction air collector chamber substantially in two parts, the first part being in connection with the feeding channel and the second part with each of the connecting channels.

The heat transfer elements at the opposite ends of the collector chamber are advantageously arranged so that their heat transfer efficiency is different. In this way, an increase of the suction air temperature is obtained as desired. To further this, the heat transfer elements of the heat transfer apparatus may comprise two different flow circuits, in which the heat transfer media are at different temperature levels. These may be positioned so that one heat transfer element flow circuit restricts the first part and the other the second part of the collector chamber. Additionally or alternatively, the heat transfer elements on the opposite ends of the collector chamber can be arranged in such a way that their air side flow resistance is different.

Extending throughout substantially the entire inside length of the collector chamber, there may be arranged a heat transfer apparatus fastening arrangement, which makes possible the controlled moving of each heat transfer element to the position thereof from an end of the collector chamber. The fastening arrangement is, for example, formed of a guiding arrangement, each heat transfer element comprising on two opposite sides thereof a guiding arrangement counter-apparatus, with the co-operation of which the heat transfer element is movable along the guiding arrangement.

Each heat transfer element may have its own flow circuit joint, detachable from the heat transfer element. Because of this, when the flow circuit joint is detached, each heat transfer element can be displaced in the guiding arrangement.

The invention will now be described, by way of example only, with reference to the accompanying drawings, in which:-
Figure 1 shows schematically one embodiment of the piston engine suction air arrangement according to the invention,
Figure 2 shows schematically the cross section of the suction air collector chamber close to a first end, and
Figure 3 shows schematically the cross section of the suction air collector chamber near to the second end.

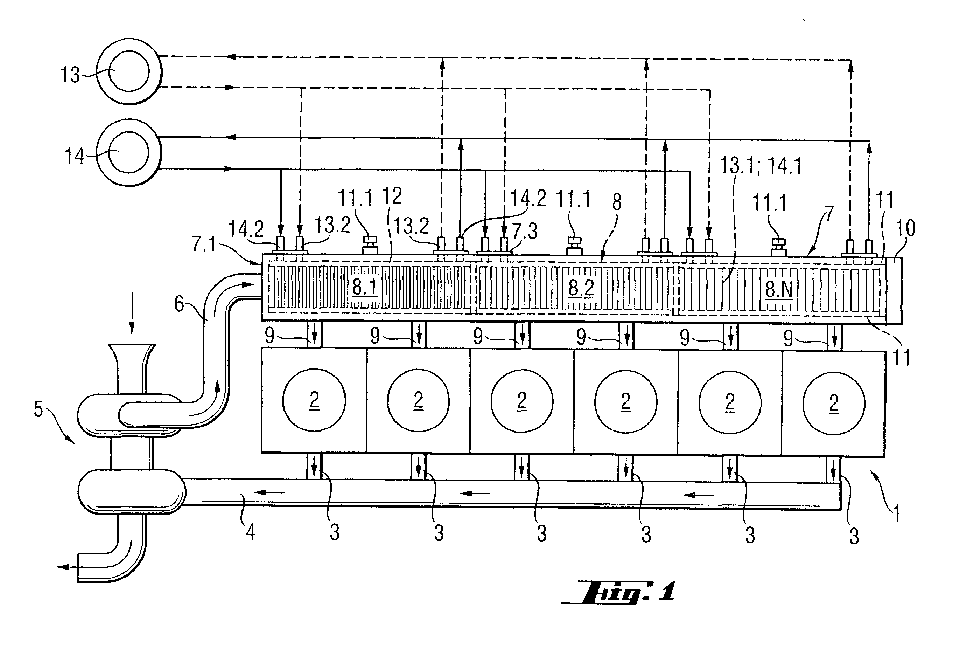

In Figure 1, the reference numeral 1 corresponds to the supercharged piston engine. The engine comprises several cylinders 2 arranged inline. From each cylinder there is arranged an exhaust gas channel 3 to an exhaust pipe 4, which is in connection with a turbine of a turbocharger 5. When the engine is running, suction air flows to a compressor of the turbocharger 5, in which the pressure of the air as well as the temperature will rise. From the turbocharger 5 suction air is led to a feeding channel 6, which connects the turbocharger apparatus 5 to an inlet part 7.1 of a collector chamber 7. In the collector chamber 7, there is arranged a heat transfer apparatus 8, by which suction air can be e.g. cooled. The collector chamber is further connected with each of the engine cylinders 2 by connecting channels 9 leading thereto.

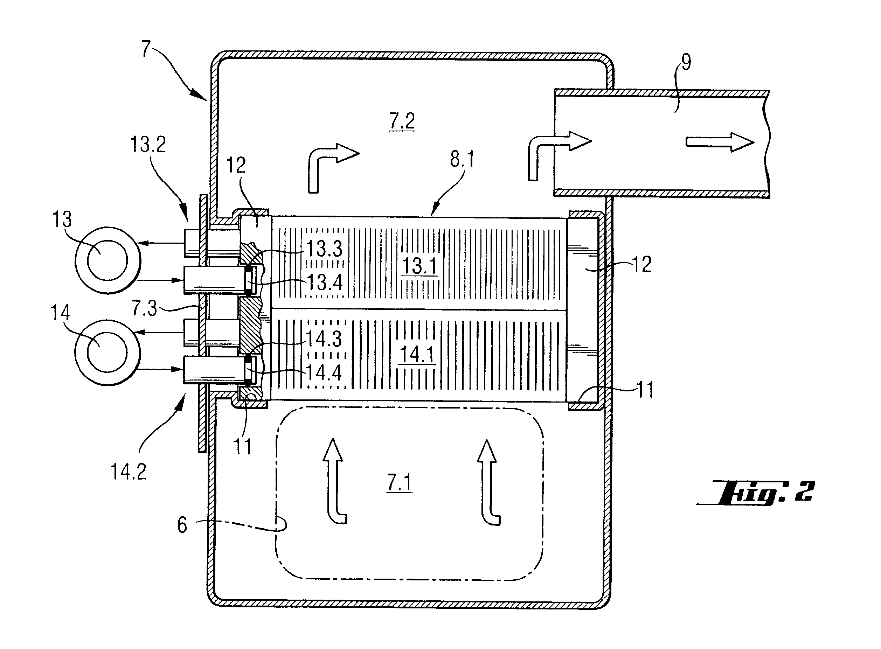

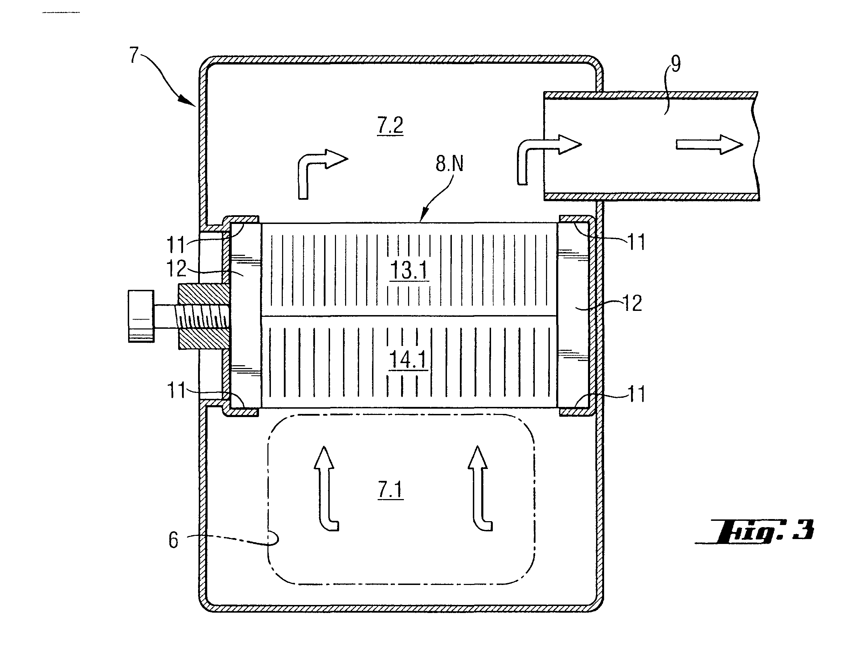

The heat transfer apparatus 8 comprises several separate heat transfer elements 8.1, 8.2...8.N fitted in the collector chamber 7 in its longitudinal direction throughout substantially the entire inside length thereof, so that the frontal face of the heat transfer apparatus is substantially parallel with the longitudinal axis of the collector chamber. The feeding channel 6 opens to the inlet part 7.1 of the collector chamber 7, which is before the heat transfer apparatus in the flow direction of the suction air, that is to say, in Figures 2 and 3, below the heat transfer apparatus. The inlet part 7.1 is restricted to the first frontal face of each individual heat transfer element. In the collector chamber 7 there is arranged, extending throughout substantially the entire inside length thereof, a heat transfer apparatus fastening arrangement 11, 12 which makes possible the guided moving of each heat transfer element 8.1...8.N to the position thereof from the other end of the collector chamber. At the end of the collector chamber 7, there is an end piece 10, by which the collector chamber can be closed.

The fastening arrangement comprises advantageously a guiding arrangement 11 attached to the wall of the collector chamber, positioned therewith or formed from a part thereof, along with which the heat transfer elements can be moved and to which the heat transfer elements supported. Each heat transfer element includes a guiding arrangement counter arrangement 12, by which each heat transfer element may move along the guide. Thus, if required, the heat transfer elements may be re-moved and reinstalled by opening the end piece 10, by moving each heat transfer element along the guiding arrangement 11 to the right position thereof and by closing the end piece. This means that the heat transfer elements are advantageously in connection with each other so that the combustion air flows through their heat surfaces. After this, the heat transfer elements may be connected to the flow circuits thereof and placed in positions. The heat transfer elements are fastened advantageously with fastening devices 11.1, fitted with the guiding arrangement 11, by which the displacement of the heat transfer elements can be prevented. E.g. a screw or equivalent, extending outside the collector chamber 7, can be used for this purpose.

Figure 2 shows the cross section of the collector chamber 7 near to its first end and Figure 3 near to the opposite end with respect to the first end. For bringing the air temperature on a suitable level for each cylinder, the heat transfer elements 8.1 and 8.N at the opposite ends of the collector chamber have been arranged so that their heat transfer efficiency is different. Furthermore, the heat transfer elements 8.1 and 8.N at the opposite ends of the collector chamber can be arranged so that their air side flow resistance is different for guiding the flow more uniformly through the heat transfer arrangement 8. This way the need for separate air deflector arrangements can be minimized.

The suction air arrangement comprises two separate flow circuits 13 and 14, which operate on different temperature levels. In the same way, each heat transfer element 8.1...8.N comprises two separate flow circuits 13.1 and 14.1, which have been located so that one flow circuit restricts the inlet part 7.1 and the other the outlet side 7.2 of the collector chamber. When combustion air is cooled, the flow circuits are advantageously connected in such a way that air flows first through the flow circuit 14.1 operating on a higher temperature level and after that through the flow circuit 13.1 operating on a lower temperature level. Each heat transfer element is connected to the flow circuits 13, 14 with flow circuit joints 13.2, 14.2 that can be detached from the heat transfer elements for making possible the displacement thereof. It is important that the joints 13.2,14.2 are designed such that after removal of the joints the heat transfer elements may be moved in the guiding arrangement. Moving may be accomplished advantageously so that the joining surface of the joints in the heat transfer elements is substantially flat. The joints (13.2,14.2) themselves are advantageously short pipes or the like provided with grooves (13.4,14.4) for o-ring sealing (13.3,14.3). The joint pipe may be inserted into an opening provided in the heat transfer elements and having an appropriate diameter for a leak proof joint. The collector chamber 7 may be sealed to be substantially gas tight and the joint may be fastened to the collector chamber by means of flange-like elements 7.3.

The heat transfer efficiency of the heat transfer elements can be affected in a manner known per se by selecting, among other things, surface area, fins and material. Also, the flow resistance of the heat transfer elements can be affected in a manner known per se, such as by selecting the desired flow surface area, form or properties of the surface.

The invention is not limited to the embodiments shown but several modifications are feasible within the scope of the attached claims.

## Claims

1. Piston engine (1) suction air arrangement, which comprises a supercharger apparatus (5), a suction air collector chamber (7), a feeding channel (6), which is in connection with the supercharger apparatus and with an inlet part of the collector chamber, for each engine cylinder (2) a connecting channel (9), which connects the cylinder (2) and the collector chamber (7), as well as a suction air heat transfer apparatus (8) positioned in connection with the suction air collector chamber (7), the heat transfer apparatus (8) comprising several heat transfer elements (8.1....8.N) in the collector chamber (7) throughout substantially the entire inside length thereof, **characterized in that** each heat transfer element (8.1...8.N) comprises flow circuit joints (13.2, 14.2), which are detachable from the heat transfer element for displacement thereof in a guiding arrangement (11) in the collector chamber (7).

2. Piston engine suction air arrangement according to claim 1, in which the piston engine (1) comprises several cylinders (2) arranged inline and in which the suction air collector chamber (7) extends throughout substantially the whole length of the cylinder line, **characterized in that** the heat transfer apparatus (8) divides the suction air collector chamber essentially in two parts, the inlet part (7.1) being in connection with the feeding channel (6) and an outlet part (7.2) with each of the connecting channels (9).

3. Piston engine (1) suction air arrangement according to claim 1 or 2, **characterized in that** the heat transfer elements (8.1, 8.N) at opposite ends of the collector chamber (7) have been arranged in such a way that their heat transfer efficiency is different.

4. Piston engine (1) suction air arrangement according to claim 1, 2 or 3, **characterized in that** the heat transfer elements (8.1, 8.N) at opposite ends of the collector chamber (7) have been arranged in such a way that their air side flow resistance rate is different.

5. Piston engine (1) suction air arrangement according to any one of the preceding claims, **characterized in that** in the collector chamber there is arranged, extending throughout substantially the entire length thereof, a heat transfer apparatus fastening arrangement (11, 12), which makes possible the controlled moving of each heat transfer element (8.1...8.N) to the position thereof from an end of the collector chamber (7).

6. Piston engine suction air arrangement according to claim 1 and 5, **characterized in that** the fastening arrangement is formed of the guiding arrangement (11), and that each heat transfer element comprises, on the two opposite sides thereof, a guiding arrangement counter-apparatus (12), by the co-operation of which the heat transfer element (8.1...8.N) is movable along the guiding arrangement (11).

7. Piston engine suction air arrangement according to claim 2, **characterized in that** the heat transfer elements (8.1...8.N) of the heat transfer apparatus comprise two different flow circuits (13.1, 14.1), which are located in such a way that one flow circuit restricts the inlet part (7.1) and the other the outlet part (7.2) of the collector chamber.

## Patentansprüche

1. Saugluftanordnung für Kolbenmotor (1), die Folgendes umfasst: eine Ladervorrichtung (5), eine Saugluftsammelkammer (7), einen mit der Ladervorrichtung und mit einem Einlassteil der Sammelkammer in Verbindung stehenden Zuführungskanal (6), für jeden Motorzylinder (2), einen Verbindungskanal (9), der den Zylinder (2) und die Sammelkammer (7) verbindet, sowie eine Saugluftwärmeübertragungsvorrichtung (8), die mit der Saugluftsammelkammer (7) in Verbindung steht, wobei die Wärmeübertragungsvorrichtung (8) mehrere Wärmeübertragungselemente (8.1...8.N) in der Sammelkammer (7) über im Wesentlichen deren ganze Innenlänge umfasst, **dadurch gekennzeichnet, dass** jedes Wärmeübertragungselement (8.1...8.N) Strömungskreislaufverbindungen (13.2, 14.2) umfasst, die von dem Wärmeübertragungselement zu dessen Verschiebung in einer Führungsanordnung (11) in der anderen Sammelkammer (7) trennbar sind.

2. Saugluftanordnung für Kolbenmotor nach Anspruch 1, bei der der Kolbenmotor (1) mehrere Zylinder (2) umfasst, die in Reihe angeordnet sind, und bei der sich die Saugluftsammelkammer (7) über im Wesentlichen die ganze Länge der Zylinderreihe erstreckt, **dadurch gekennzeichnet, dass** die Wärmeübertragungsvorrichtung (8) die Saugluftsammelkammer im Wesentlichen in zwei Teile trennt, wobei der Einlassteil (7.1) mit dem Zuführungskanal (6) und ein Auslassteil (7.2) mit jedem der Verbindungskanäle (9) in Verbindung steht.

3. Saugluftanordnung für Kolbenmotor (1) nach Anspruch 1 oder 2, **dadurch gekennzeichnet, dass** die Wärmeübertragungselemente (8.1, 8.N) an gegenüberliegenden Enden der Sammelkammer (7) so angeordnet worden sind, dass sich ihre Wärmeübertragungsleistung unterscheidet.

4. Saugluftanordnung für Kolbenmotor (1) nach Anspruch 1, 2 oder 3, **dadurch gekennzeichnet, dass** die Wärmeübertragungselemente (8.1, 8.N) an gegenüberliegenden Enden der Sammelkammer (7) so angeordnet worden sind, dass sich ihre Luftseitenströmungswiderstandsrate unterscheidet.

5. Saugluftanordnung für Kolbenmotor (1) nach einem der vorhergehenden Ansprüche, **dadurch gekennzeichnet, dass** in der Sammelkammer eine Wärmeübertragungsvorrichtungsbefestigungsanordnung (11, 12) angeordnet ist, die sich über im Wesentlichen die ganze Länge der Sammelkammer erstreckt und die kontrollierte Bewegung jedes Wärmeübertragungselements (8.1...8.N) in seine Position von einem Ende der Sammelkammer (7) ermöglicht.

6. Saugluftanordnung für Kolbenmotor nach Anspruch 1 und 5, **dadurch gekennzeichnet, dass** die Befestigungsanordnung aus der Führungsanordnung (11) hergestellt ist und dass jedes Wärmeübertragungselement auf seinen beiden gegenüberliegenden Seiten eine Führungsanordnungs-Gegenvorrichtung umfasst, wobei das Wärmeübertragungselement (8.1...8.N) durch Zusammenwirken damit entlang der Führungsanordnung (11) beweglich ist.

7. Saugluftanordnung für Kolbenmotor nach Anspruch 2, **dadurch gekennzeichnet, dass** die Wärmeübertragungselemente (8.1...8.N) der Wärmeübertragungsvorrichtung zwei verschiedene Strömungskreisläufe (13.1, 14.1) umfassen, die so angeordnet sind, dass ein Strömungskreislauf den Einlassteil (7.1) und der andere den Auslassteil (7.2) der Sammelkammer einschränkt.

## Revendications

1. Dispositif d'admission d'air pour moteur à pistons (1), comprenant un compresseur à suralimentation (5), une chambre de collecteur d'air d'admission (7), une conduite d'alimentation (6), qui est en liaison avec le compresseur à suralimentation et avec une partie d'entrée de la chambre de collecteur, pour chaque cylindre du moteur (2), une conduite de connexion (9), qui relie le cylindre (2) et la chambre de collecteur (7), ainsi qu'un appareil de transfert thermique d'air d'admission (8) positionné en liaison avec la chambre de collecteur d'air d'admission (7), l'appareil de transfert thermique (8) comprenant plusieurs éléments de transfert thermique (8.1...8.N) dans la chambre de collecteur (7) sur substantiellement toute la longueur intérieure de celle-ci, **caractérisé en ce que** chaque élément de transfert thermique (8.1...8.N) comprend des joints de circuit d'écoulement (13.2, 14.2) qui peuvent être détachés de l'élément de transfert thermique pour permettre son déplacement dans un dispositif de guidage (11) dans la chambre de collecteur (7).

2. Dispositif d'admission d'air pour moteur à pistons selon la revendication 1, dans lequel le moteur à pistons (1) comprend plusieurs cylindres (2) arrangés en ligne et dans lequel la chambre de collecteur d'air d'admission (7) s'étend sur substantiellement toute la longueur de la ligne de cylindres, **caractérisé en ce que** l'appareil de transfert thermique (8) divise la chambre de collecteur d'air d'admission essentiellement en deux parties, la partie d'entrée (7.1) étant en liaison avec la conduite d'alimentation (6) et une partie de sortie (7.2) étant en liaison avec chacune des conduites de connexion (9).

3. Dispositif d'admission d'air pour moteur à pistons (1) selon la revendication 1 ou 2, **caractérisé en ce que** les éléments de transfert thermique (8.1, 8.N) aux extrémités opposées de la chambre de collecteur (7) ont été agencés de telle sorte que leur rendement de transfert thermique soit différent.

4. Dispositif d'admission d'air pour moteur à pistons (1) selon la revendication 1, 2 ou 3, **caractérisé en ce que** les éléments de transfert thermique (8.1, 8.N) aux extrémités opposées de la chambre de collecteur (7) ont été agencés de telle sorte que leur taux de résistance à l'écoulement latéral de l'air soit différent.

5. Dispositif d'admission d'air pour moteur à pistons (1) selon l'une quelconque des revendications précédentes, **caractérisé en ce que** dans la chambre de collecteur est arrangé un dispositif d'attache de l'appareil de transfert thermique (11, 12) s'étendant substantiellement sur toute la longueur de la chambre de collecteur, qui permet le déplacement contrôlé de chaque élément de transfert thermique (8.1...8.N) dans sa position depuis une extrémité de la chambre de collecteur (7).

6. Dispositif d'admission d'air pour moteur à pistons selon les revendications 1 et 5, **caractérisé en ce que** le dispositif d'attache est formé du dispositif de guidage (11) et **en ce que** chaque élément de transfert thermique comprend, sur ses deux côtés opposés, un appareil conjugué au dispositif de guidage (12), dont la coopération permet de déplacer l'élément de transfert thermique (8.1...8.N) le long du dispositif de guidage (11).

7. Dispositif d'admission d'air pour moteur à pistons selon la revendication 2, **caractérisé en ce que** les éléments de transfert thermique (8.1...8.N) de l'appareil de transfert thermique comprennent deux circuits d'écoulement différents (13.1, 14.1) qui sont situés de manière à ce qu'un circuit d'écoulement limite la partie d'entrée (7.1) et que l'autre limite la partie de sortie (7.2) de la chambre de collecteur.
